# EUROPÄISCHE PATENTSCHRIFT

(11) **EP 1 893 941 B1**
(45) Veröffentlichungstag und Bekanntmachung des Hinweises auf die Patenterteilung: **14.04.2010**
(21) Anmeldenummer: 06753898.3
(22) Anmeldetag: 26.05.2006
(51) Int. Cl.: G01B 21/04

(54) **VERFAHREN UND VORRICHTUNG ZUM BESTIMMEN VON GEOMETRISCHEN PARAMETERN EINES KONISCHEN MESSOBJEKTS**
METHOD AND DEVICE FOR DETERMINING GEOMETRIC PARAMETERS OF A CONICAL OBJECT TO BE MEASURED
PROCEDE ET DISPOSITIF POUR DETERMINER DES PARAMETRES GEOMETRIQUES D'UN OBJET DE MESURE CONIQUE

(30) Priorität: 21.06.2005 DE 102005030274
(43) Veröffentlichungstag der Anmeldung: 05.03.2008
(73) Patentinhaber: Carl Zeiss Industrielle Messtechnik GmbH, 73447 Oberkochen (DE)
(72) Erfinder: STAADEN, Ulrich, 73431 Aalen (DE); WIMMER, Martin, 89555 Steinheim (DE)
(74) Vertreter: Duhme, Torsten
(86) Internationale Anmeldenummer: PCT/EP2006/005036
(87) Internationale Veröffentlichungsnummer: WO 2006/136263

(56) Entgegenhaltungen:
- EP-A- 1 130 353
- DE-A1- 19 600 002
- PATENT ABSTRACTS OF JAPAN Bd. 009, Nr. 253 (P-395), 11. Oktober 1985 (1985-10-11) & JP 60 104209 A (ISHIKAWAJIMA HARIMA JUKOGYO KK), 8. Juni 1985 (1985-06-08)

## Beschreibung

Die vorliegende Erfindung betrifft ein Verfahren zum Bestimmen von geometrischen Parametern eines konischen Messobjekts mit Hilfe eines Koordinatenmessgerätes, mit den Schritten:
a) Bestimmen von Raumkoordinaten an einer Vielzahl von Messpunkten des Messobjekts,
b) Bestimmen eines Ersatzelements für das Messobjekt unter Verwendung der Raumkoordinaten der Messpunkte, und
c) Bestimmen der geometrischen Parameter des Messobjekts anhand des Ersatzelements.

Die Erfindung betrifft ferner eine Vorrichtung zum Bestimmen von geometrischen Parametern eines konischen Messobjekts, mit einem verfahrbaren Messkopf und mit Positionsmesseinrichtungen, um eine Raumposition des Messkopfes zu bestimmen, mit einem Speicher zum Abspeichern einer Vielzahl von Raumkoordinaten von einer Vielzahl von Messpunkten an dem Messobjekt, und mit einer Auswerteeinheit zum Bestimmen eines Ersatzelements für das Messobjekt unter Verwendung der Raumkoordinaten und zum Bestimmen der geometrischen Parameter des Messobjekts anhand des Ersatzelements.

Ein solches Verfahren und eine solche Vorrichtung sind bspw. aus Albert Weckenmann und Bernd Gawande, "Koordinatenmesstechnik: Flexible Maßstrategien für Maß, Form und Lage", Hanser-Verlag, München/Wien, 1999 bekannt. Insbesondere ist ein Verfahren der eingangs genannten Art auf den Seiten 172 bis 179 beschrieben. Der grundsätzliche Aufbau einer Vorrichtung der oben genannten Art ist auf den Seiten 50 und 51 beschrieben.

Bei der Qualitätskontrolle von industriell hergestellten Werkstücken werden die Werkstücke häufig mit Hilfe von Koordinatenmessgeräten vermessen, um zu überprüfen, ob die Werkstücke den Spezifikationen entsprechen. Ein zu vermessendes Werkstück wird in dem Messvolumen eines Koordinatenmessgerätes platziert. Das Koordinatenmessgerät besitzt einen Messkopf, häufig in Form eines so genannten Tastkopfes, mit dem definierte Messpunkte des Werkstücks angetastet werden. Aus der Stellung des Tastkopfes im Messvolumen und der definierten Lage des Messobjekts im Messvolumen lassen sich dann die Raumkoordinaten des angetasteten Messpunktes bestimmen. Wenn man die Raumkoordinaten von einer Vielzahl von Messpunkten bestimmt, kann man auch geometrische Parameter des Messobjektes, bspw. den Umfang oder den Durchmesser einer Bohrung oder die Länge einer Seite bestimmen.

Jedes Messung ist jedoch von Messfehlern überlagert, die unterschiedliche Ursachen haben. Teilweise lassen sich Messfehler vorhersagen, bspw. aufgrund einer Änderung der Raumtemperatur. Teilweise sind die Messfehler jedoch unbekannt. Darüber hinaus weist jedes Werkstück individuelle Fertigungstoleranzen auf. Es stellt eine Herausforderung an die Koordinatenmesstechnik dar, die (unbekannten) Fertigungstoleranzen der Werkstücke auch dann zu erkennen, wenn die überlagerten (und zum Teil unbekannten) Messfehler in gleicher Größenordnung liegen.

Wenn ein Messobjekt mit einem Koordinatenmessgerät an einer Vielzahl von Messpunkten vermessen wird, erhält man als Ergebnis eine "Punktewolke" von Raumkoordinaten. Verbindet man diese Punkte gedanklich, erhält man ein messtechnisches Abbild des Messobjekts. Dieses messtechnische Abbild wird sich von dem idealen Messobjekt aufgrund der Messfehler und aufgrund der Fertigungstoleranzen unterscheiden. Da die Bestimmung von geometrischen Parametern an dem messtechnischen Abbild in Abhängigkeit davon, welche einzelnen Messpunkte zugrunde gelegt werden, erheblich variieren kann, wird üblicherweise ein ideales Ersatzelement bestimmt, das der "Punktewolke" möglichst gut angepasst ist. Das Ersatzelement erlaubt eine besser reproduzierbare und besser vergleichbare Bestimmung der geometrischen Parameter. Es gibt verschiedene Ersatzelemente, die abhängig von der Form des Messobjekts und abhängig von den gesuchten geometrischen Parametern unterschiedlich gut geeignet sind. Bekannt sind vor allem Gauß-Elemente, Minimum-Elemente, Hüll-Elemente und Pferch-Elemente. Bei einem Gauß-Element ist die Summe der Quadrate der Abweichungen zwischen den Messpunkten und dem idealen Ersatzelement minimiert. Beim Minimum-Element ist die betragsgrößte Abweichung zwischen Ersatzelement und jedem beliebigen Messpunkt minimiert. Gauß- und Minimumelemente lassen sich als Ersatzelemente sowohl für "offene" Elemente (z.B. Gerade oder Ebene) als auch für "geschlossene" Elemente (z.B. Kreis, Kugel, Zylinder) bestimmen.

Das Hüll-Element ist das kleinstmögliche Ersatzelement, das alle Messpunkte umschließt. Das Pferch-Element ist das größtmögliche Ersatzelement, bei dem alle Messpunkte außerhalb liegen. Da die Hüll- und Pferch-Ersatzelemente zumindest einige Messpunkte, nämlich die jeweils "extremsten" Messpunkte, berühren, spricht man hier auch von anliegenden Ersatzelementen.

Hüll- und Pferch-Elemente sind gut geeignet, um geometrische Parameter wie Ort, Orientierung sowie Durchmesser, Länge und andere Paarungsmaße zu bestimmen. Bei konischen Messobjekten lassen sich Hüll- bzw. Pferch-Elemente jedoch bislang nur bestimmen, wenn man zusätzliche Bedingungen (Nebenbedingungen) festlegt, bspw. den Kegelwinkel des Hüll- oder Pferch-Kegels. Solche Nebenbedingungen erschweren allerdings die Vergleichbarkeit bei unabhängig voneinander vorgenommenen Messungen, da stets die Nebenbedingung berücksichtigt werden muss.

Aus DE 198 21 372 A1 sind ein Koordinatenmessgerät und ein Verfahren zu seiner Steuerung bekannt, wobei eine Vielzahl von Raumkoordinaten an einer Vielzahl von Messpunkten bestimmt werden. Zur Definition der auf dem Messobjekt abzutastenden Messpunkte sind in der Steuerung des Koordinatenmessgerätes Parameter von Geometrieelementen, wie Kreis oder Ebene, abgespeichert. DE 198 21 372 A1 schlägt vor, die Parameter in Bezug auf ein jeweils eigenes Koordinatensystem der Geometrieelemente abzuspelchern. Ein Hinweis zur Lösung der oben beschriebenen Probleme bei der Bestimmung von Hüll- oder Pferch-Elementen für ein konisches Messobjekt findet sich hier jedoch nicht.

Vor diesem Hintergrund ist es eine Aufgabe der vorliegenden Erfindung, ein Verfahren und eine Vorrichtung der eingangs genannten Art anzugeben, die eine Vermessung von konischen Messobjekten mit einer höheren Reproduzierbarkeit und einer besseren Vergleichbarkeit ermöglichen.

Nach einem ersten Aspekt der vorliegenden Erfindung wird diese Aufgabe durch ein Verfahren der eingangs genannten Art gelöst, bei dem im Schritt b)
b1) zunächst ein erstes konisches Ersatzelement unter Verwendung der Raumkoordinaten bestimmt wird,
b2) anhand des ersten konischen Ersatzelements ein annähernd zylindrisches, virtuelles Zwischenelement bestimmt wird, wobei ein Kegelwinkel des ersten konischen Ersatzelements bestimmt wird und die Raumkoordinaten der Messpunkte unter Verwendung des Kegelwinkels derart transformiert werden, dass die transformierten Raumkoordinaten das annähernd zylinderförmige Zwischenelement beschreiben,
b3) ein anliegendes Ersatzelement zu dem annähernd zylindrischen, virtuellen Zwischenelement bestimmt wird, und
b4) ein zweites konisches Ersatzelement anhand des anliegenden Ersatzelements bestimmt wird, indem das erste konische Ersatzelement so ausgerichtet wird wie das anliegende zylindrische Ersatzelement, wobei die geometrischen Parameter anhand des zweiten konischen Ersatzelements bestimmt werden.

Die Aufgabe wird ferner durch eine Vorrichtung der eingangs genannten Art gelost, bei der die Auswerteeinheit dazu ausgebildet ist, zunächst ein erstes konisches Ersatzelement unter Verwendung der Raumkoordinaten zu bestimmen, anhand des ersten konischen Ersatzelements ein annähernd zylindrisches, virtuelles Zwischenelement zu bestimmen, wobei ein Kegelwinkel des ersten konischen Ersatzelements bestimmt wird und die Raumkoordinaten der Messpunkte unter Verwendung des Kegelwinkels derart transformiert werden, dass die transformierten Raumkoordinaten das annähernd zylinderförmige Zwischenelement beschreiben, anhand des annähernd zylindrischen, virtuellen Zwischenelements ein anliegendes Ersatzelement zu bestimmen, und anhand des anliegenden Ersatzelements ein zweites konisches Ersatzelement zu bestimmen, indem das erste konische Ersatzelement so ausgerichtet wird wie das anliegende zylindrische Ersatzelement, wobei die geometrischen Parameter anhand des zweiten konischen Ersatzelements bestimmbar sind.

Die vorliegende Erfindung beruht damit auf der Idee, ein konisches Ersatzelement über den Umweg eines zylindrischen Ersatzelements zu bestimmen. Da ein zylindrisches Hüll- oder Pferch-Element ohne Nebenbedingung exakt definiert ist, kann auf diese Weise auch ein konisches Hüll- oder Pferch-Element ohne Nebenbedingung eindeutig und reproduzierbar bestimmt werden. Dadurch ist das zweite konische Ersatzelement allein aus der Lage der Messpunkte eindeutig definiert. Die Angabe von geometrischen Parametern, die anhand des zweiten konischen Ersatzelements bestimmt werden, ist daher sehr gut reproduzierbar und dementsprechend sind die geometrischen Parameter besser vergleichbar als bei den im Stand der Technik angewendeten Vorgehensweisen.

Andererseits ermöglicht es die vorliegende Erfindung, Hüll- oder Pferch-Elemente für konische Messobjekte zu bestimmen, so dass die Vorteile von Hüll- oder Pferch-Elementen auch für diese Messobjekte vorteilhaft eingesetzt werden können.

Es wird der messtechnisch erfasste Konus, der durch die Raumkoordinaten der Messpunkte beschrieben wird, zu einem virtuellen Zylinder "umgeformt". Der Durchmesser dieses Zylinders entspricht bevorzugt in etwa dem Durchmesser an der Grundfläche des konischen Messobjekts. Da ein zylinderförmiges Messobjekt ohne Nebenbedingung eindeutig durch ein Hüll- oder Pferch-Element ersetzt werden kann, eröffnet diese Umformung die reproduzierbare und vergleichbare Auswertung der Messpunkte. Dabei stellt die Umformung unter Verwendung des zuvor bestimmten Kegelwinkels eine rechnerisch einfache Transformation dar, die geringe Anforderungen an die Rechenkapazität der Auswerteeinheit stellt.

Die oben genannte Aufgabe ist daher vollständig gelöst.

In einer vorteilhaften Ausgestaltung der Erfindung wird als erstes konisches Ersatzelement ein Minimumkegel bestimmt.

Ein Minimumkegel im Sinne dieser Ausgestaltung ist ein kegelförmiges Ersatzelement, das die Minimum-Bedingung erfüllt (betragsgrößte Abweichung zwischen Ersatzelement und jedem beliebigen Messpunkt ist minimal). Alternativ hierzu könnte grundsätzlich auch ein Gauß-Element als erstes konisches Ersatzelement bestimmt werden. Ein Gauß-Element liefert jedoch nur dann aussagekräftige Ergebnisse, wenn die Messwerte eine Normalverteilung aufweisen. Dies ist vor allem dann der Fall, wenn die zufälligen Messabweichungen deutlich größer sind als die vorhandenen Formabweichungen. Die bevorzugte Ausgestaltung ist von dieser Voraussetzung unabhängig und daher bei allen Messaufgaben gleichermaßen einsetzbar. Die Reproduzierbarkeit und Vergleichbarkeit der Messergebnisse ist daher noch höher.

In weiteren Ausgestaltungen der Erfindung wird ein Hüll-Zylinder und/oder ein Pferch-Zylinder als anliegendes Ersatzelement bestimmt.

Diese Ausgestaltung ist bevorzugt, weil Hüll- und Pferch-Elemente eine eindeutig definierte und reproduzierbare Bestimmung von wichtigen geometrischen Parametern ermöglichen. Insbesondere lässt sich anhand eines Hüll- bzw. Pferch-Zylinders sehr einfach feststellen, welches die größte bzw. kleinste Ausdehnung des Messobjekts ist. Gerade diese Größen sind für die Qualitätskontrolle bei Werkstücken von hoher Bedeutung.

In einer weiteren Ausgestaltung wird im Schritt b4) eine Längsachse des anliegenden Ersatzelements bestimmt und das erste konische Ersatzelement wird entlang von der Längsachse so weit verschoben, bis ein Tangentialkriterium erfüllt ist, um das zweite konische Ersatzelement zu bestimmen.

In dieser Ausgestaltung wird die Orientierung des anliegenden Ersatzelements als "Nebenbedingung" für das zweite konische Ersatzelement herangezogen. Mit anderen Worten wird das zweite konische Ersatzelement so ausgerichtet wie das anliegende (zylindrische) Ersatzelement. Diese Ausgestaltung ermöglicht auf einfache Weise aussagekräftige Messergebnisse, die der tatsächliche Form des Messobjekts gut entsprechen.

In einer weiteren Ausgestaltung weist das erste konische Ersatzelement eine Kegelspitze auf, die vor dem Verschieben auf die Längsachse des anliegenden Ersatzelements gelegt wird.

Alternativ hierzu könnte das konische Ersatzelement grundsätzlich auch "neben" der Längsachse des anliegenden, zylindrischen Ersatzelements verschoben werden, beispielsweise mit einem geringen Versatz. Die bevorzugte Ausgestaltung führt jedoch zu einer eindeutig bestimmten Lage des zweiten konischen Ersatzelements, ohne dass es einer ergänzenden Angabe bedarf. Darüber hinaus stellt das so bestimmte konische (zweite) Ersatzelement eine besonders gute Repräsentation des Messobjekts dar.

In einer weiteren Ausgestaltung wird eine Längsachse zu dem ersten konischen Ersatzelement bestimmt, und die Raumkoordinaten des Messpunktes werden so transformiert, dass das erste konische Ersatzelement mit seiner Längsachse parallel zu einer Koordinatenachse des Koordinatenmessgerätes liegt.

Diese Ausgestaltung vereinfacht die oben beschriebenen Transformationen und sie trägt dazu bei, die Anforderungen an die Rechenkapazität der Auswerteeinheit zu reduzieren.

In einer weiteren Ausgestaltung wird zumindest eine der folgenden Größen anhand des zweiten konischen Ersatzelements bestimmt: Ort des Messobjekts, Ausrichtung des Messobjekts, Längenmaße des Messobjekts, insbesondere Durchmesser und Höhe, sowie Kegelwinkel.

Diese geometrischen Parameter sind besonders aussagekräftig für die Qualitätskontrolle von konischen Werkstücken. Andererseits lassen sich diese Parameter mit Hilfe der neuen Vorgehensweise besonders einfach und gut reproduzierbar bestimmen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel eines Koordinatenmessgerätes mit einer Auswerteeinheit, die nach der vorliegenden Erfindung ausgebildet ist,
- Fig. 2 bis 4: schematische Darstellungen zur Illustration von Zwischenschritten bei der erfindungsgemäßen-Vorgehensweise, und
- Fig. 5: ein vereinfachtes Flussdiagramm zur Erläuterung des neuen Verfahrens.

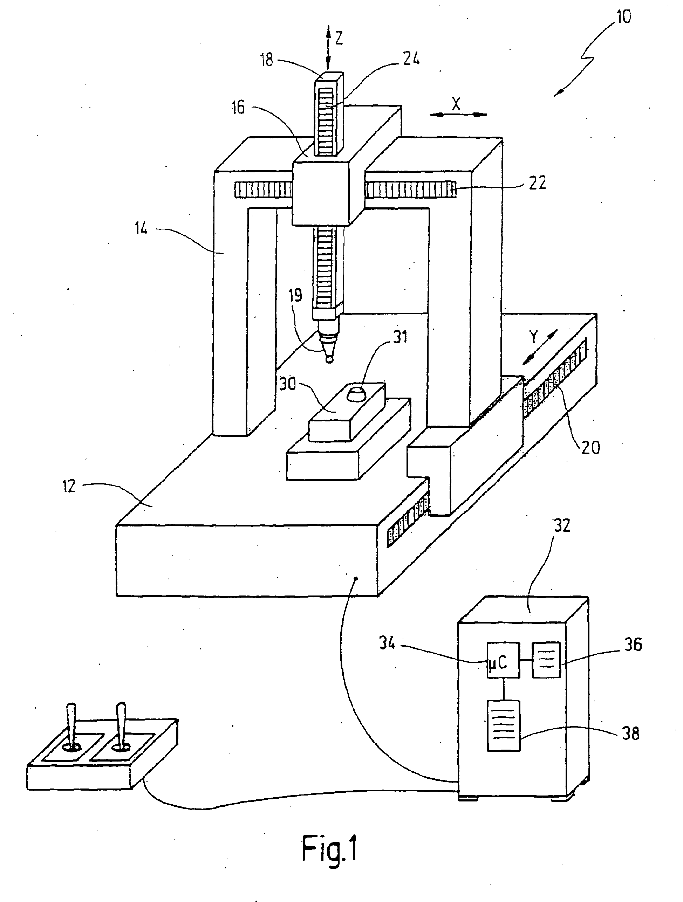

In Fig. 1 ist ein Koordinatenmessgerät, das nach der vorliegenden Erfindung ausgebildet ist, in seiner Gesamtheit mit der Bezugsziffer 10 bezeichnet.

Das Koordinatenmessgerät 10 besitzt hier eine Basis 12, auf der ein Portal 14 angeordnet ist. Das Portal 14 kann in einer Längsrichtung, die hier als y-Achse bezeichnet ist, auf der Basis 12 verfahren werden. An der Traverse des Portals 14 ist ein Schlitten 16 angeordnet, der in x-Richtung verfahren werden kann. Am Schlitten 16 sitzt eine in z-Richtung verfahrbare Pinole 18. Am unteren freien Ende der Pinole 18 ist ein Tastkopf 19 mit einem hier nicht näher bezeichneten Taststift angeordnet.

Das Koordinatenmessgerät 10 besitzt Antriebe (hier nicht näher dargestellt), über die das Portal 14, der Schlitten 16 und die Pinole 18 motorisch in den drei Raumrichtungen verfahren werden können. Damit lässt sich der Tastkopf 19 innerhalb eines Messvolumens dreidimensional verfahren.

Mit den Bezugsziffern 20, 22, 24 sind Maßstäbe bezeichnet, mit deren Hilfe die jeweilige Achsposition des Tastkopfes 19 bestimmt werden kann. Bei den Maßstäben 20, 22, 24 handelt es sich typischerweise um Glasmaßstäbe mit einer Skalierung, die optisch abgetastet wird. Alternativ hierzu kann das Koordinatenmessgerät 10 jedoch auch andere Positionsmesseinrichtungen besitzen, bspw. induktive Messeinrichtungen.

Darüber hinaus sei der Vollständigkeit halber darauf hingewiesen, dass die vorliegende Erfindung nicht nur bei Koordinatenmessgeräten in Portalbauweise, sondern auch bei anderen Koordinatenmessgeräten, bspw. in Horizontalarm- oder Brückenbauweise, eingesetzt werden kann.

Auf der Basis 12 des Koordinatenmessgerätes 10 ist ein Messobjekt 30 vereinfacht dargestellt. Das Messobjekt 30 besitzt einen konischen Abschnitt 31. Die geometrischen Parameter dieses Abschnitts 31 lassen sich mit dem neuen Verfahren bestimmen. Für nicht-konische Abschnitte des Messobjekts 30 erfolgt die Bestimmung von geometrischen Parametern in herkömmlicher Weise. Beispielsweise sei hier auf das eingangs genannte Buch von Weckenmann und Gawande verwiesen.

Das Koordinatenmessgerät 10 besitzt zur Bestimmung der geometrischen Parameter eine Auswerte- und Steuereinheit 32. Die Auswerte- und Steuereinheit 32 steuert die Verfahrbewegungen des Koordinatenmessgerätes 10 und sie führt die rechnerische Auswertung der über die Positionsmesseinrichtungen 20, 22, 24 aufgenommenen Messwerte aus. Die Auswerte- und Steuereinheit 32 ist hier schematisch mit einem Prozessor 34 und zwei Speichern 36, 38 dargestellt. Im Speicher 36 ist ein Computerprogramm hinterlegt, dessen Ausführung eine Auswertung der Messpunkte nach dem neuen Verfahren ermöglicht. Im Speicher 38 werden die von den Positionsmesseinrichtungen 20, 22, 24 gelieferten Messwerte hinterlegt.

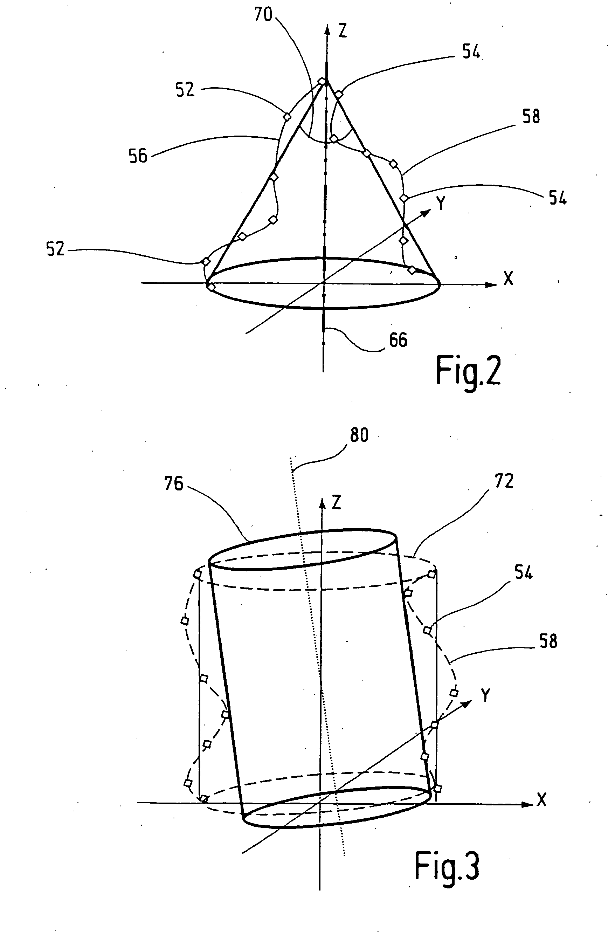

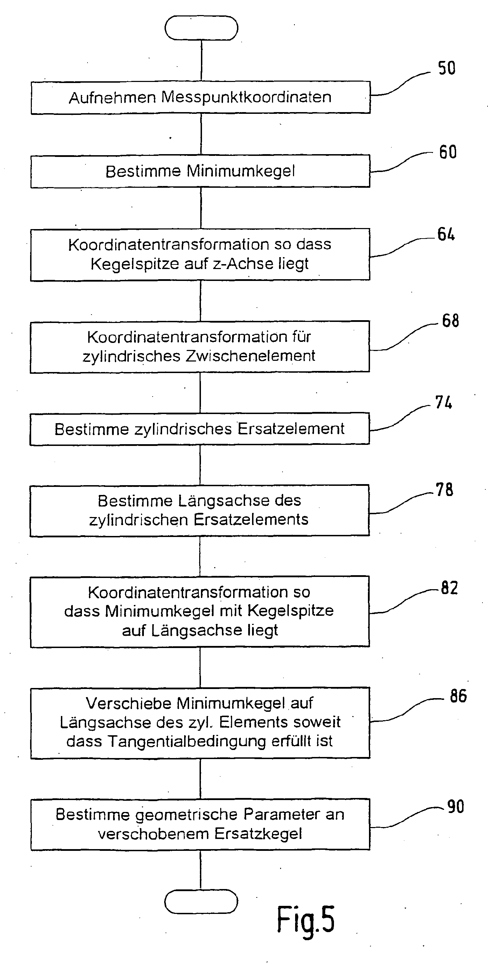

Bei der nachfolgenden Beschreibung des neuen Verfahrens und der Funktionsweise der neuen Vorrichtung wird gleichermaßen auf die graphischen Darstellungen in den Figuren 2 bis 4 und auf das Flussdiagramm in Fig. 5 Bezug genommen.

Gemäß Schritt 50 (Fig. 5) erfolgt zunächst die Aufnahme von Messpunktkoordinaten mit Hilfe des Tastkopfes 19. (Lediglich der Vollständigkeit halber sei erwähnt, dass die vorliegende Erfindung von der Art der Aufnahme der Messpunktkoordinaten unabhängig ist, d.h. die Erfindung kann sowohl mit taktilen Messköpfen als auch mit berührungslos messenden Messköpfen verwendet werden.) Insbesondere wird der konische Abschnitt 31 abgetastet. Die aufgenommenen Messpunkte sind in Fig. 2 bei den Bezugsziffern 52, 54 schematisch dargestellt. Außerdem sind die Messpunkte 52 und 54 hier mit einer Linie 56, 58 verbunden, um die Konüsform des abgetasteten Teils 31 (hier der Einfachheit halber annähernd als Kegel dargestellt) zu verdeutlichen. Es versteht sich, dass die Abweichungen der Messpunkte von der idealen Kegelform hier stark überhöht dargestellt sind.

Gemäß Schritt 60 (Fig. 5) erfolgt als Nächstes die Bestimmung eines ersten konischen Ersatzelements. Bevorzugt wird hier ein Minimumkegel zu den Messwerten 52, 54 bestimmt. Der Minimumkegel erfüllt in Bezug auf die Messpunkte 52, 54 das Minimumkriterium (betragsgrößte Abweichung zwischen Minimumkegel und jedem beliebige Messpunkt 52, 54 ist minimal).

Gemäß Schritt 64 erfolgt als Nächstes eine Koordinatentransformation so, dass die Längsachse 66 des Minimumkegels auf eine der Koordinatenachsen des verwendeten Koordinatensystems fällt. Dies kann beispielsweise eine der Achsen des Koordinatenmessgerätes 10 sein. In der Darstellung in Fig. 2 liegt die Längsachse 66 auf der z-Achse. Schritt 64 ist optional und kann in anderen Ausführungsbeispielen des neuen Verfahrens entfallen.

Gemäß Schritt 68 wird dann der Kegelwinkel ϕ (Bezugsziffer 70) des Minimumkegels bestimmt, und es erfolgt eine Koordinatentransformation unter Verwendung des Kegelwinkel ϕ derart, dass die transformierten Messpunkte 52, 54 die Mantelfläche eines zylinderförmigen, virtuellen Zwischenelements 72 bilden. Bildlich gesehen wird der Minimumkegel aus Fig. 2 an seiner Kegelspitze so weit aufgebogen, dass die ursprünglich konische Kegelmantelfläche nun den Zylindermantel bildet.

Im Schritt 74 erfolgt als Nächstes die Bestimmung eines zylindrischen Ersatzelements 76 zu dem virtuellen Zwischenelements 72. Gemäß einem bevorzugten Ausführungsbeispiel ist das zylindrische Ersatzelement 76 in Fig. 3 als Pferch-Zylinder dargestellt. Allgemein handelt es sich hier um ein anliegendes zylindrisches Ersatzelement. In anderen Ausführungsbeispielen kann das Ersatzelement 76 daher auch ein Füllzylinder sein (hier nicht dargestellt) der die Hüllbedingung (kleinstmögliches Ersatzelement, das alle Messpunkte umschließt) erfüllt.

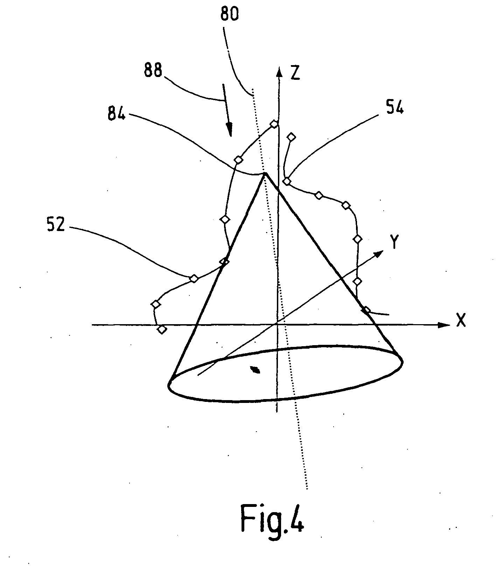

Im nächsten Schritt 78 wird die Längsachse 80 des zylindrischen Ersatzelements 76 bestimmt. Anschließend erfolgt im Schritt 82 eine Koordinatentransformation des Minimumkegels derart, dass die Kegelspitze 84 auf der in Schritt 78 bestimmten Längsachse des zylindrischen Ersatzelements 76 zu liegen kommt (Fig. 4). Nun wird gemäß Schritt 86 der Minimumkegel entlang der Längsachse 80 soweit verschoben (Pfeil 88), dass ein Tangentialkriterium erfüllt ist. In dem hier dargestellten Ausführungsbeispiel ist das Tangentialkriterium die Pferch-Bedingung. Das Ersatzelement, hier also der Minimumkegel, wird soweit verschoben, dass alle Messpunkte 52, 54 außerhalb des Ersatzelements liegen, wobei das Ersatzelement so dicht wie möglich an die Messpunkte 52, 54 herangeschoben ist.

Gemäß Schritt 90 können dann geometrische Parameter an dem verschobenen Minimumkegel bestimmt werden, bspw. die Orientierung entlang der Längsachse 80, der Kegeldurchmesser ϕ oder ein Zweipunktmaße, wie etwa ein Durchmesser oder eine Kegelhöhe.

Die vorliegende Erfindung wurde hier mit Bezug auf den konischen Abschnitt 31 eines Messobjekts 30 beschrieben. Es versteht sich, dass die Erfindung auch bei Messobjekten anwendbar ist, die insgesamt eine konische Form besitzen. Darüber hinaus ist die Erfindung gleichermaßen anwendbar bei konischen Außenformen, bspw. dem konischen Schaft eines Werkzeughalters, und bei konischen Innenformen, bspw. einer konischen Aufnahme für einen Werkzeughalter.

## Patentansprüche

1. Verfahren zum Bestimmen von geometrischen Parametern eines konischen Messobjekts (31) mit Hilfe eines Koordinatenmessgerätes (10), mit den Schritten:
a) Bestimmen (50) von Raumkoordinaten an einer Vielzahl von Messpunkten (52, 54) des Messobjekts (31),
b) Bestimmen (60, 74, 82, 86) eines Ersatzelements (76) für das Messobjekt (31) unter Verwendung der Raumkoordinaten der Messpunkte (52, 54), und
c) Bestimmen (90) der geometrischen Parameter des Messobjekts (31) anhand des Ersatzelements,
**dadurch gekennzeichnet, dass** im Schritt b)
b1) zunächst ein erstes konisches Ersatzelement unter Verwendung der Raumkoordinaten bestimmt wird (60),
b2) dass anhand des ersten konischen Ersatzelements ein annähernd zylindrisches, virtuelles Zwischenelement (72) bestimmt wird (68), wobei ein Kegelwinkel (ϕ) des ersten konischen Ersatzelements bestimmt wird und die Raumkoordinaten der Messpunkte (52, 54) unter Verwendung des Kegelwinkels (ϕ) derart transformiert werden, dass die transformierten Raumkoordinaten das annähernd zylinderförmige Zwischenelement (72) beschreiben,
b3) dass ein anliegendes Ersatzelement (76) zu dem annähernd zylindrischen, virtuellen Zwischenelement (72) bestimmt wird (74), und
b4) dass ein zweites konisches Ersatzelement anhand des anliegenden Ersatzelements (76) bestimmt wird, indem das erste konische Ersatzelement so ausgerichtet wird wie das anliegende zylindrische Ersatzelement (76), wobei die geometrischen Parameter anhand des zweiten konischen Ersatzelements bestimmt werden.

2. Verfahren nach Anspruch 1, **dadurch gekennzeichnet, dass** als erstes konisches Ersatzelement ein Minimumkegel bestimmt wird.

3. Verfahren nach einem der Ansprüche 1 oder 2, **dadurch gekennzeichnet, dass** ein Hüllzylinder als anliegendes Ersatzelement (76) bestimmt wird.

4. Verfahren nach einem der Ansprüche 1 bis 3, **dadurch gekennzeichnet, dass** ein Pferchzylinder als anliegendes Ersatzelement (76) bestimmt wird.

5. Verfahren nach einem der Ansprüche 1 bis 4, **dadurch gekennzeichnet, dass** im Schritt b4) eine Längsachse (80) des anliegenden Ersatzelements (76) bestimmt wird und dass das erste konische Ersatzelement entlang von der Längsachse (80) so weit verschoben wird, bis ein Tangentialkriterium erfüllt ist, um das zweite konische Ersatzelement zu bestimmen.

6. Verfahren nach Anspruch 5, **dadurch gekennzeichnet, dass** das erste konische Ersatzelement eine Kegelspitze (84) aufweist, die vor dem Verschieben auf die Längsachse (80) des anliegenden Ersatzelements (76) gelegt wird.

7. Verfahren nach einem der Ansprüche 1 bis 6, **dadurch gekennzeichnet, dass** eine Längsachse (66) zu dem ersten konischen Ersatzelement bestimmt wird und dass die Raumkoordinaten der Messpunkte (52, 54) so transformiert werden, dass das erste konische Ersatzelement mit der zweiten Längsachse (66) parallel zu einer Koordinatenachse (Z) des Koordinatenmessgerätes (10) liegt.

8. Verfahren nach einem der Ansprüche 1 bis 7, **dadurch gekennzeichnet, dass** zumindest eine der folgenden Größen anhand des zweiten konischen Ersatzelements bestimmt wird: Ort des Messobjekts, Ausrichtung des Messobjekts, Längenmaße des Messobjekts, Kegelwinkel (ϕ).

9. Computerprogrammprodukt mit Programmcode, der dazu ausgebildet ist, ein Verfahren nach einem der Ansprüche 1 bis 8 durchzuführen, wenn der Programmcode auf einem Computer abläuft.

10. Vorrichtung zum Bestimmen von geometrischen Parametern eines konischen Messobjekts (31), mit:
- einem verfahrbaren Messkopf (19) und mit Positionsmesseinrichtungen (20, 22, 24), um eine Raumposition des Messkopfes (19) zu bestimmen,
- einem Speicher (38) zum Abspeichern einer Vielzahl von Raumkoordinaten von einer Vielzahl von Messpunkten (52, 54) an dem Messobjekt (31), und
- einer Auswerteeinheit (34) zum Bestimmen eines Ersatzelements (76) für das Messobjekt (31) unter Verwendung der Raumkoordinaten und zum Bestimmen der geometrischen Parameter des Messobjekts (31) anhand des Ersatzelements (76),
**dadurch gekennzeichnet, dass** die Auswerteeinheit (34) dazu ausgebildet ist,
- zunächst ein erstes konisches Ersatzelement unter Verwendung der Raumkoordinaten zu bestimmen,
- anhand des ersten konischen Ersatzelements ein annähernd zylindrisches, virtuelles Zwischenelement (72) zu bestimmen, wobei ein Kegelwinkel (ϕ) des ersten konischen Ersatzelements bestimmt wird und die Raumkoordinaten der Messpunkte (52, 54) unter Verwendung des Kegelwinkels (ϕ) derart transformiert werden, dass die transformierten Raumkoordinaten das annähernd zylinderförmige Zwischenelement (72) beschreiben,
- anhand des annähernd zylindrischen, virtuellen Zwischenelements (72) ein anliegendes Ersatzelement (76) zu bestimmen, und
- anhand des anliegenden Ersatzelements (76) ein zweites konisches Ersatzelement zu bestimmen, indem das erste konische Ersatzelement so ausgerichtet wird wie das anliegende zylindrische Ersatzelement (76), wobei die geometrischen Parameter anhand des zweiten konischen Ersatzelements bestimmbar sind.

## Claims

1. A method for determining geometric parameters of a conical measurement object (31) by means of a coordinate measuring machine (10), the method comprising the steps of:
a) determining (50) spatial coordinates at a plurality of measurement points (52, 54) on the measurement object (31),
b) determining (60, 74, 82, 86) an equivalent element (76) for the measurement object (31) using the spatial coordinates of the measurement points (52, 54), and
c) determining (90) geometric parameters of the measurement object (31) based on the equivalent element,
**characterized in that** step b) comprises
b1) determining (60) a first conical equivalent element using the spatial coordinates in the first instance,
b2) determining (68) a substantially cylindrical virtual intermediate element (72) based on the first conical equivalent element, wherein a cone angle (ϕ) of the first conical equivalent element is determined and the spatial coordinates of the measurement points (52, 54) are transformed using the cone angle (ϕ) in such a manner that the transformed spatial coordinates define the substantially cylindrical intermediate element (72),
b3) determining (74) a tangential equivalent element (76) for the substantially cylindrical virtual intermediate element (72), and
b4) determining a second conical equivalent element based on the tangential equivalent element (76) by adjusting the first conical equivalent element like the tangential cylindrical equivalent element (76), wherein the geometric parameters are determined based on the second conical equivalent element.

2. The method of claim 1, **characterized in that** a minimum cone is determined as the first conical equivalent element.

3. The method of one of claims 1 or 2, **characterized in that** a circumscribed cylinder is determined as tangential equivalent element (76).

4. The method of one of claims 1 to 3, **characterized in that** an inscribed cylinder is determined as tangential equivalent element (76).

5. The method of one of claims 1 to 4, **characterized in that** a longitudinal axis (80) of the tangential equivalent element (76) is determined in step b4) and the first conical equivalent element is adjusted along the longitudinal axis (80) until a tangential criterion is met, in order to determine the second conical equivalent element.

6. The method of claim 5, **characterized in that** the first conical equivalent element comprises a cone tip (84) which is positioned on the longitudinal axis (80) of the tangential equivalent element (76) prior to the adjustment.

7. The method of one of claims 1 to 6, **characterized in that** a longitudinal axis (66) for the first conical equivalent element is determined and the spatial coordinates of the measurement points (52, 54) are transformed in such a manner that the first conical equivalent element including the second longitudinal axis (66) becomes to lie parallel to a coordinate axis (Z) of the coordinate measuring machine (10).

8. The method of one of claims 1 to 7, **characterized in that** at least one of the following quantities is determined based on the second conical equivalent element: position of the measurement object, orientation of the measurement object, linear dimensions of the measurement object, cone angle (ϕ).

9. A computer program product comprising a program code which is configured to carry out a method according to one of claims 1 to 8, when the program code is executed on a computer.

10. An apparatus for determining geometric parameters of a conical measurement ' object (31), comprising:
- a movable measurement head (19) and comprising position measurement devices (20, 22, 24) for determining a spatial position of the measurement head (19),
- a memory (38) for storing a plurality of spatial coordinates from a plurality of measurement points (52, 54) on a measurement object (31), and
- an evaluation unit (34) for determining an equivalent element (76) for the measurement object (31) using the spatial coordinates and for determining the geometric parameters of the measurement object (31) based on the equivalent element (76),
**characterized in that** the evaluation unit (34) is configured
- to determine a first conical equivalent element using the spatial coordinates in a first instance,
- to determine a substantially cylindrical virtual intermediate element (72) based on the first conical equivalent element, wherein a cone angle (ϕ) of the first conical equivalent element is determined and the spatial coordinates of the measurement points (52, 54) are transformed using the cone angle (ϕ) in such a manner that the transformed spatial coordinates define the substantially cylindrical intermediate element (72),
- to determine a tangential equivalent element (76) based on the substantially cylindrical virtual intermediate element (72), and
- to determine a second conical equivalent element based on the tangential equivalent element (76) by adjusting the first conical equivalent element like the tangential cylindrical equivalent element (76), wherein the geometric parameters can be determined based on the second conical equivalent element.

## Revendications

1. Procédé de détermination des paramètres géométriques d'un objet (31) conique à mesurer, au moyen d'un dispositif de mesure des coordonnées (10), comportant les étapes :
a) détermination (50) des coordonnées spatiales sur une pluralité de points de mesure (52, 54) de l'objet (31) à mesurer,
b) détermination (60, 74, 82, 86) d'un élément de remplacement (76) pour l'objet (31) à mesurer, moyennant l'utilisation des coordonnées spatiales des points de mesure (52, 54), et
c) détermination (90) des paramètres géométriques de l'objet (31) à mesurer, à l'appui de l'élément de remplacement,
**caractérisé en ce que** dans l'étape b)
b1) est déterminé (60) tout d'abord un premier élément de remplacement conique, moyennant l'utilisation des coordonnées spatiales,
b2) **en ce qu'**à l'appui du premier élément de remplacement conique est déterminé (68) un élément intermédiaire (72) virtuel, sensiblement cylindrique, un angle de cône (ϕ) du premier élément de remplacement conique étant déterminé et les coordonnées spatiales des points de mesure (52, 54) étant transformées moyennant l'utilisation de l'angle de cône (ϕ), de telle sorte que les coordonnées spatiales transformées décrivent l'élément intermédiaire (72) sensiblement cylindrique,
b3) **en ce qu'**un élément de remplacement (76) adjacent est déterminé (74) pour l'élément intermédiaire (72) virtuel sensiblement cylindrique, et
b4) **en ce qu'**un deuxième élément de remplacement conique est déterminé à l'appui de l'élément de remplacement (76) adjacent, du fait que le premier élément de remplacement conique est orienté tout comme l'élément de remplacement (76) cylindrique adjacent, les paramètres géométriques étant déterminés à l'appui du deuxième élément de remplacement conique.

2. Procédé selon la revendication 1, **caractérisé en ce qu'**un cône minimum est déterminé en tant que premier élément de remplacement conique.

3. Procédé selon la revendication 1 ou 2, **caractérisé en ce qu'**un cylindre externe est déterminé en tant qu'élément de remplacement (76) adjacent.

4. Procédé selon l'une quelconque des revendications 1 à 3,
**caractérisé en ce qu'**un cylindre interne est déterminé en tant qu'élément de remplacement (76) adjacent.

5. Procédé selon l'une quelconque des revendications 1 à 4,
**caractérisé en ce que** dans l'étape b4) est déterminé un axe longitudinal (80) de l'élément de remplacement (76) adjacent et **en ce que** le premier élément de remplacement conique est déplacé le long de l'axe longitudinal (80) jusqu'à ce qu'un critère tangentiel soit rempli pour déterminer le deuxième élément de remplacement conique.

6. Procédé selon la revendication 5, **caractérisé en ce que** le premier élément de remplacement conique comporte un sommet de cône (84) qui, avant le déplacement, est posé sur l'axe longitudinal (80) de l'élément de remplacement (76) adjacent.

7. Procédé selon l'une quelconque des revendications 1 à 6,
**caractérisé en ce qu'**un axe longitudinal (66) est déterminé pour le premier élément de remplacement conique, et **en ce que** les coordonnées spatiales des points de mesure (52, 54) sont transformées de telle sorte que le premier élément de remplacement conique est situé avec le deuxième axe longitudinal (66) parallèlement à un axe de coordonnées (Z) du dispositif de mesure des coordonnées (10).

8. Procédé selon l'une quelconque des revendications 1 à 7,
**caractérisé en ce qu'**au moins l'une des grandeurs suivantes est déterminée à l'appui du deuxième élément de remplacement conique : lieu de l'objet à mesurer, orientation de l'objet à mesurer, longueur de l'objet à mesurer, angle de cône (ϕ).

9. Produit de programme d'ordinateur avec un code programme, qui est configuré pour la mise en oeuvre d'un procédé selon l'une quelconque des revendications 1 à 8, lorsque le code programme se déroule sur un ordinateur.

10. Dispositif de détermination des paramètres géométriques d'un objet (31) conique à mesurer, comportant :
- une tête de mesure (19) mobile et des dispositifs de mesure de positions (20, 22, 24), pour déterminer une position dans l'espace de la tête de mesure (19),
- une mémoire (38) pour stocker une pluralité de coordonnées spatiales d'une pluralité de points de mesure (52, 54) sur l'objet (31) à mesurer, et
- une unité d'analyse (34) pour déterminer par l'utilisation des coordonnées spatiales un élément de remplacement (76) pour l'objet (31) à mesurer et pour déterminer à l'appui de l'élément de remplacement (76) les paramètres géométriques de l'objet (31) à mesurer,
**caractérisé en ce que** l'unité d'analyse (34) est configurée pour
- déterminer tout d'abord un premier élément de remplacement conique moyennant l'utilisation des coordonnées spatiales,
- déterminer à l'appui du premier élément de remplacement conique un élément intermédiaire (72) virtuel sensiblement cylindrique, un angle de cône (ϕ) du premier élément de remplacement conique étant déterminé et les coordonnées spatiales des points de mesure (52, 54) étant transformées moyennant l'utilisation de l'angle de cône (ϕ), de telle sorte que les coordonnées spatiales transformées décrivent l'élément intermédiaire (72) sensiblement cylindrique,
- déterminer à l'appui de l'élément intermédiaire virtuel, sensiblement cylindrique un élément de remplacement (76) adjacent, et
- déterminer à l'appui de l'élément de remplacement (76) adjacent un deuxième élément de remplacement conique, du fait que le premier élément de remplacement conique est orienté tout comme l'élément de remplacement (76) cylindrique adjacent, les paramètres géométriques pouvant être déterminés à l'appui du deuxième élément de remplacement conique.
